# EUROPEAN PATENT APPLICATION

(11) **EP 3 133 487 A1**
(43) Date of publication of application: **22.02.2017**
(21) Application number: 16184897.3
(22) Date of filing: 19.08.2016
(51) Int. Cl.: G06F 3/12

(54) **DRAWING COMMAND PROCESSING APPARATUS, DRAWING COMMAND PROCESSING METHOD, AND PROGRAM**

(30) Priority: 21.08.2015 JP 2015163620
(71) Applicant: Canon Kabushiki Kaisha, Tokyo 146-8501 (JP)
(72) Inventor: NAGASAKA, Hitoshi, Tokyo, Tokyo 146-8501 (JP)
(74) Representative: TBK

(57) **Abstract**

In the case where an object of gradation is drawn, printing results are different between the V3 driver and the V4 driver. A drawing command processing apparatus determines (S401,S403) whether an image drawing command represents a gradation image based on a plurality of determination criteria. Then, in the case where the image drawing command is determined to represent a gradation image, the drawing command processing apparatus processes (S405) the image drawing command as a drawing command of an object with a graphics attribute.

## Description

### BACKGROUND OF THE INVENTION

### Field of the Invention

The present invention relates to an image processing technique in accordance with an attribute of an object.

### Description of the Related Art

In a printer driver, image processing in accordance with an attribute of an object to be drawn, such as "text", "graphics", and "image", is performed. It is known that printing results will be more natural by using, for example, a dither pattern that gives priority to resolution for graphics drawing, and a dither pattern that gives priority to gradation for image drawing as a dither pattern used for halftone representation.

On the other hand, in recent years, the printer driver for Windows (registered trademark) is making a transition from the GDI driver (hereinafter, referred to as the V3 driver) having been used as the main driver to the XPS driver (hereinafter, referred to as the V4 driver). In the near future, the main driver will be the V4 driver. The V3 driver generates print data by interpreting a drawing command in the form of GDI (Graphics Device Interface). The V4 driver generates print data by interpreting a drawing command in the form of XPS (XML Paper Specification).

In many of current applications, a drawing command in the form of GDI is output to the printer driver in the case where printing processing is performed. The V3 driver directly interprets a gradation drawing command in the form of GDI, and therefore, the V3 driver determines an object represented by the gradation drawing command to be a graphics object (graphics attribute) and performs image processing for graphics for the object.

On the other hand, in the printing processing that uses the V4 driver for an application that outputs a drawing command in the form of GDI to the printer driver in the case where printing processing is performed, processing such as follows is performed. That is, the MXDW (Microsoft (registered trademark) XPS Document Writer), which is a part of the OS function, converts the drawing command in the form of GDI output from the application into a drawing command in the form of XPS. Then, the OS delivers the converted drawing command in the form of XPS to the V4 driver.

The MXDW converts a monochrome graphics drawing command in the form of GDI into a graphics drawing command in the form of XPS, but performs processing to turn an object into an image in the case of converting a gradation drawing command in the form of GDI into that in the form of XPS. That is, an object having been represented by a gradation drawing command in the form of GDI is now represented by an image drawing command in the form of XPS. Consequently, the gradation turned into an image (i.e., gradation represented by an image drawing command) by the MXDW is input to the V4 driver. In the V4 driver, the object is represented by an image drawing command, and therefore, the object is determined to be an image object (image attribute). Because of this, in the V4 driver, image processing for image is performed for the object. That is, the image processing to be performed for an object indicating the gradation is different between the V3 driver and the V4 driver, and therefore, printing results on paper are also different.

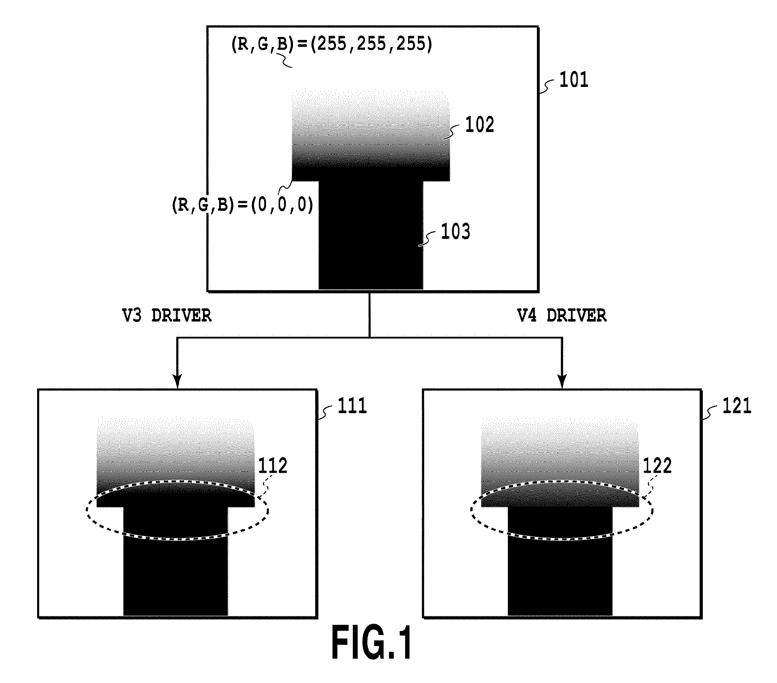

FIG. 1 shows an example of a difference in printing results between the V3 driver and the V4 driver. A window 101 shows the drawing results on an application. A graphics object 102 is a graphics object of gradation and the color of the lower side is black ((R, G, B) = (0, 0, 0)) and the color of the upper side is white ((R, G, B) = (255, 255, 255)). A graphics object 103 is a monochrome graphics object and the color is black ((R, G, B) = (0, 0, 0)). A window 111 shows the results of printing the data output from the application having drawn the window 101 by using the V3 driver. In the V3 driver, the two graphics objects 102 and 103 input in the form of GDI are interpreted directly, and therefore, the V3 driver determines both the objects to have a graphics attribute. Consequently, the V3 driver performs the same image processing for graphics for both the objects, and therefore, a difference in color does not occur at a boundary 112. On the other hand, a window 121 shows the results of printing the same data output from the application by using the V4 driver. The data input to the V4 driver is, as described previously, the data after the data in the form of GDI output from the application is converted into that in the form of XPS by the MXDW. As described previously, the graphics object 102 of gradation is delivered to the V4 driver after being turned into an image by the MXDW, and therefore, the image processing for image is performed in the V4 driver and printing are performed. On the other hand, the monochrome graphics object 103 is delivered to the V4 driver as a graphics object also in the form of XPS, and therefore, the image processing for graphics is performed in the V4 driver and printing are performed. In this manner, the different image processing is performed for each object, and therefore, a difference in color occurs at a boundary 122 of the two objects. FIG. 1 shows the printing results in a somewhat exaggerated manner in order to make the difference in printing results easy-to-see.

Japanese Patent Laid-Open No. 2010-152597 has disclosed a technique to reduce the amount of calculation in a printer apparatus by a printer driver determining, in the case where a drawing command to draw out an image of one pixel column is input from an application, whether the density of a color of the image changes for each predetermined number of pixels and in the case where it is determined that the density of the color changes, and replacing the drawing command with a printing command to blot out for each block of the same color.

Originally, a gradation drawing command should be processed as a drawing command of an object with a graphics attribute, but in the V4 driver, the object of the gradation drawing command is turned into an image by the MXDW and the drawing command is input as a drawing command of an image object. Because of this, in the V4 driver, the portion of the gradation is processed as an image object and there is a case where the drawing results differ from those in the V3 driver. The gradation that may be turned into an image by the MXDW has a variety of patterns. Japanese Patent Laid-Open No. 2010-152597 has disclosed the processing to replace the drawing command to draw out an image of one pixel column with another, but has not disclosed such processing to determine whether an image having a variety of patterns that may be turned into an image by the MXDW is a gradation image.

### SUMMARY OF THE INVENTION

The present in its first aspect provides a drawing command processing apparatus as specified in claims 1 to 12. The present invention in its second aspect provides a drawing command processing method as specified in claim 13. The present invention in its third aspect provides a program as specified in claim 14.

Further features of the present invention will become apparent from the following description of exemplary embodiments (with reference to the attached drawings).

### BRIEF DESCRIPTION OF THE DRAWINGS

FIG. 1 shows an example of a difference in printing results between the V3 driver and the V4 driver;
FIG. 2 shows a block diagram showing a configuration example of a printing system in a first embodiment;
FIG. 3 shows a block diagram showing details of an information processing apparatus in the first embodiment;
FIG. 4 shows a flowchart of an example of gradation image determination processing in the first embodiment;
FIG. 5 shows examples of gradation types;
FIG. 6 shows a flowchart of an example of gradation image type determination processing in the first embodiment;
FIG. 7 shows a flowchart of an example of gradation image detail determination processing in the first embodiment;
FIG. 8A and FIG. 8B each show a modification example of a gradation image drawing command in the first embodiment;
FIG. 9A and FIG. 9B each show a modification example of a gradation image drawing command in a second embodiment; and
FIG. 10 shows a block diagram showing details of a printing system in a third embodiment.

### DESCRIPTION OF THE EMBODIMENTS

Hereinafter, with reference to the attached drawings, the present invention is explained in detail in accordance with preferred embodiments. Configurations shown in the following embodiments are merely exemplary and the present invention is not limited to the configurations shown schematically.

### <<Terms>>

Terms used herein are explained below.

"Gradation image": an object of an image having a gradation pattern. A gradation image is an object of an image, and therefore, the attribute of a gradation image is treated as "image" unless such processing as explained in the following embodiment is performed. In the embodiment to be explained below, processing for treating the attribute of a gradation image as "graphics" is explained.

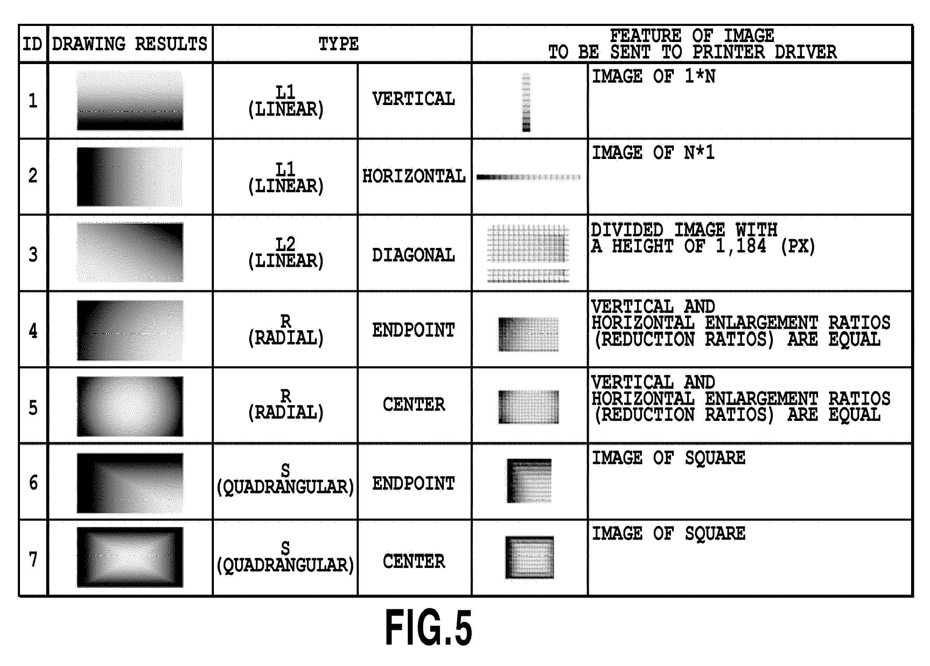

"Gradation type": a combination of the kind of gradation (linear, radial, quadrangular) and the start position of gradation. Details will be described later in FIG. 5.

### [First embodiment]

In a first embodiment, explanation is given by taking an example of an information processing apparatus, such as a computer with a built-in printer driver in a printing processing system, as a drawing command processing apparatus. However, the drawing command processing apparatus is not limited to the apparatus with a built-in printer driver. For example, a printing apparatus that interprets and processes a drawing command included in PDL data in a controller within the printing apparatus in place of a printer driver also functions as a drawing command processing apparatus. In the present embodiment, explanation is given by taking an example in which the function of a drawing command processing apparatus is implemented in a printer driver.

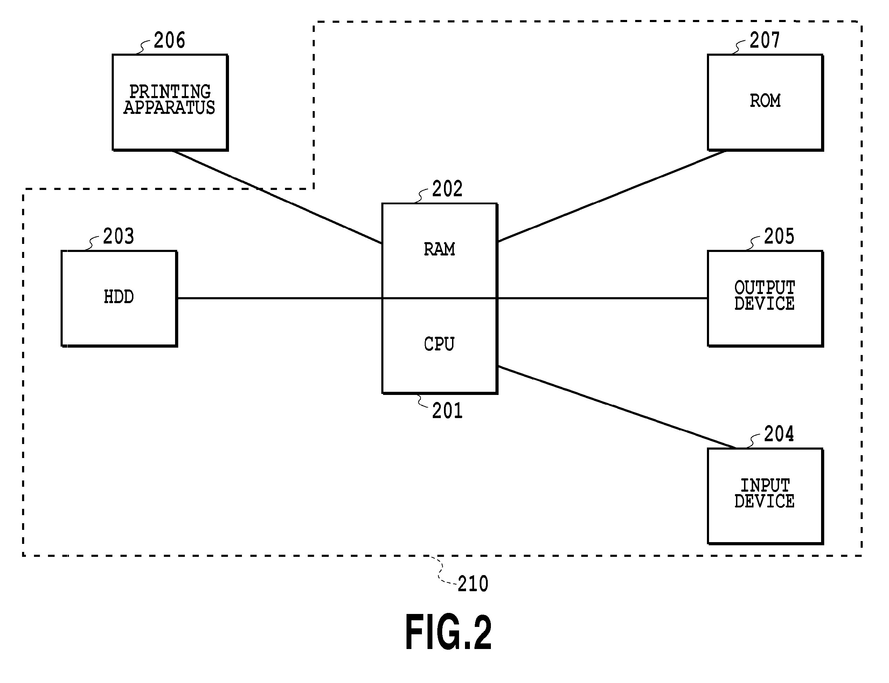

FIG. 2 is a block diagram showing a configuration example of a printing system in the present embodiment. The printing system has a CPU 201, a RAM 202, an HDD 203, an input device 204, an output device 205, a printing apparatus 206, and a ROM 207. The CPU 201 reads programs relating to processing of the present embodiment and related data from the HDD 203. After this, the CPU 201 processes information that is input from the input device 204 by using a system program (OS) and an application program loaded onto the RAM 202 from the HDD 203 and outputs the results to the output device 205 and the printing apparatus 206. In the present embodiment, the output device 205 is a display device, such as a display, and distinguished from the printing apparatus 206. The input device 204 includes a keyboard, a pointing device, a touch panel, etc. The HDD 203 may take any form of a device for storing data. Each block shown in FIG. 2 may be integrated into one apparatus/device or may be connected with one another via a network. In the example in FIG. 2, the CPU 201, the RAM 202, the HDD 203, the input device 204, the output device 205, and the ROM 207 constitute an information processing apparatus 210 and print data is output to the printing apparatus 206 from the information processing apparatus 210.

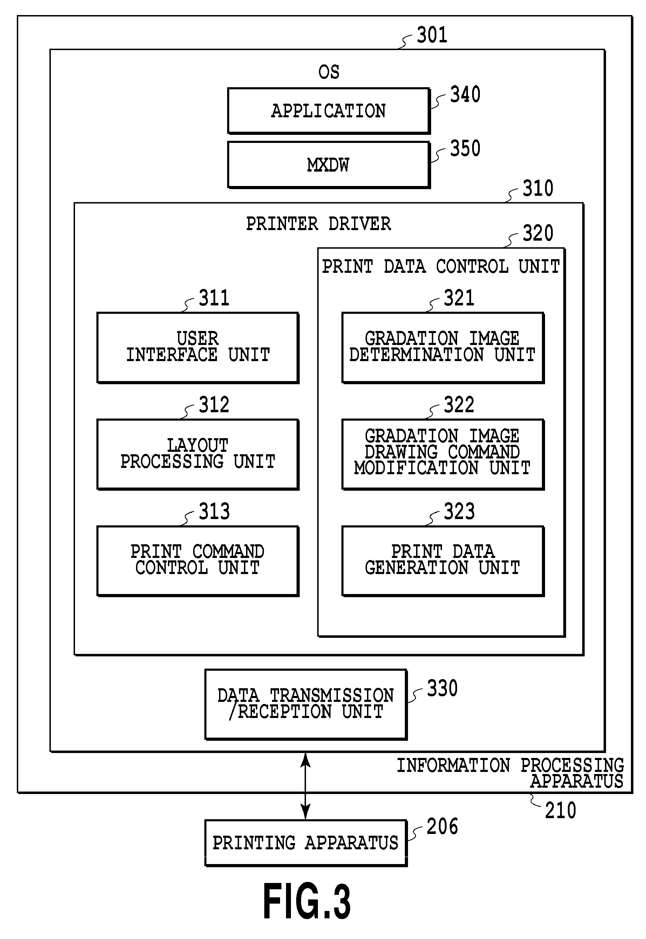

FIG. 3 is a block diagram showing details of the information processing apparatus 210. The information processing apparatus 210 has an OS 301. The information processing apparatus 210 has a printer driver 310, a data transmission/reception unit 330, an application 340, and an MXDW 350 that function on the OS 301. The printer driver 310 has a user interface unit 311, a layout processing unit 312, a print command control unit 313, and a print data control unit 320. The print data control unit 320 has a gradation image determination unit 321, a gradation image drawing command modification unit 322, and a print data generation unit 323. The information processing apparatus 210 on which the OS 301 runs is connected with the printing apparatus 206 by a wire or wirelessly and transmission and reception of data are performed.

The application 340 is application software for creating document data including a graphics object of gradation or the like. Here, it is assumed that the application 340 outputs a drawing command in the form of GDI. The drawing command in the form of GDI for printing document data created in the application 340 is input to the MXDW 350. The MXDW 350 converts the drawing command in the form of GDI into a drawing command in the form of XPS. At this time, as described previously, the drawing command of a graphics object of gradation is converted into a drawing command of an image object. Then, the converted drawing command in the form of XPS is output to the printer driver 310.

The printer driver 310 is a printer driver (software) that controls the printing apparatus 206. The user interface unit 311 is a user interface unit for a user to input various print settings and to give instructions to start printing to the printing apparatus 206. The layout processing unit 312 receives a drawing command output from the application 340 via the MXDW 350 and performs conversion processing relating to the layout, such as N-up. The print data control unit 320 creates data that can be processed by the printing apparatus 206 based on the drawing command specified by the layout processing unit 312. As will be described later, the print data control unit 320 performs modification processing of the drawing command of a gradation image. It may also be possible to perform the modification processing of the drawing command of a gradation image by the print data control unit 320 before the processing by the layout processing unit 312.

The gradation image determination unit 321 determines whether or not the image is a gradation image in the case where an image drawing command is input. The gradation image drawing command modification unit 322 changes the image drawing command determined to represent a gradation image by the gradation image determination unit 321 so as to be treated as a graphics drawing command. The drawing command change processing may be processing to change the input drawing command in the form of XPS itself or may be processing to change intermediate data to be generated at the time of generation of the intermediate data based on the drawing command. Alternatively, the drawing command change processing may be processing to change the intermediate data of an image object generated based on the drawing command into intermediate data of a graphics object. The gradation image drawing command modification unit 322 outputs the intermediate data in which the modified item is reflected. The print data generation unit 323 creates print data, such as bitmap data and PDL data, based on the intermediate data output by the gradation image drawing command modification unit 322.

The print command control unit 313 controls all of the print commands, such as changing the print data generated by the print data generation unit 323 into a print command compatible with the printing apparatus 206. The data transmission/reception unit 330 is a part of the function of the OS 301 and performs transmission and reception of data with the printing apparatus 206. The data transmission/reception unit 330 transmits the print command generated in the print command control unit 313 to the printing apparatus 206. The printing apparatus 206 performs printing processing in accordance with the print command received from the data transmission/reception unit 330 of the connected host device (information processing apparatus 210)

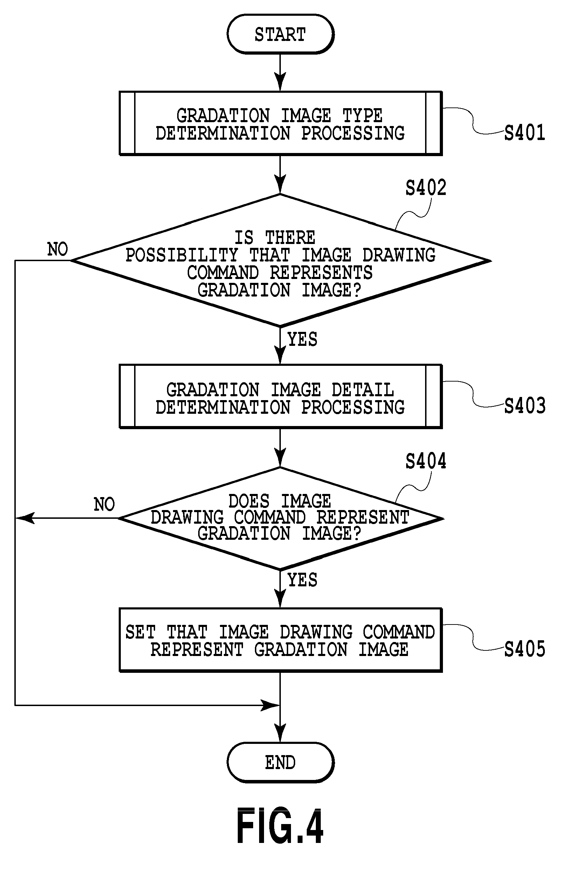

Next, the operation of the printer driver 310 is explained by using FIG. 4.

FIG. 4 shows a flowchart of gradation image determination processing by the gradation image determination unit 321 in FIG. 3. This processing is processing that is performed by executing the program of the printer driver. In the case where a user gives instructions to perform printing to the application 340, the application 340 issues a drawing command of data to be printed to the OS 301. In the environment of the V4 driver, the OS 301 sends a drawing command in the form of GDI to the MXDW 350 and issues a drawing command in the form of XPS converted in the MXDW 350 to the printer driver, and then, this flowchart is started. Drawing commands (outline drawing command or the like) other than the image drawing command are not processed in the processing in this flowchart and the processing by the gradation image drawing command modification unit 322, to be described later, and therefore, the processing in FIG. 4 is skipped. The processing shown in FIG. 4 is repeated for each drawing command. Here, one drawing command refers to a drawing command corresponding to one object. For example, in the example in FIG. 1 described previously, two drawing commands are issued.

At step S401, the gradation image determination unit 321 acquires an image drawing command from the OS 301 (MXDW 350) and performs gradation image type determination processing. That is, the gradation image determination unit 321 determines whether there is a possibility that the acquired image drawing command represents a gradation image turned into an image by the MXDW 350. A gradation image turned into an image is an image that is output as a graphics object of gradation by the application 340 and converted into an image object. In the case where there is a possibility that the acquired image drawing command represents a gradation image turned into an image, the gradation image determination unit 321 also determines the gradation type of the gradation image. At step S401, the gradation image determination unit 321 performs primary determination processing to determine whether or not there is a possibility that the acquired image drawing command represents a gradation image.

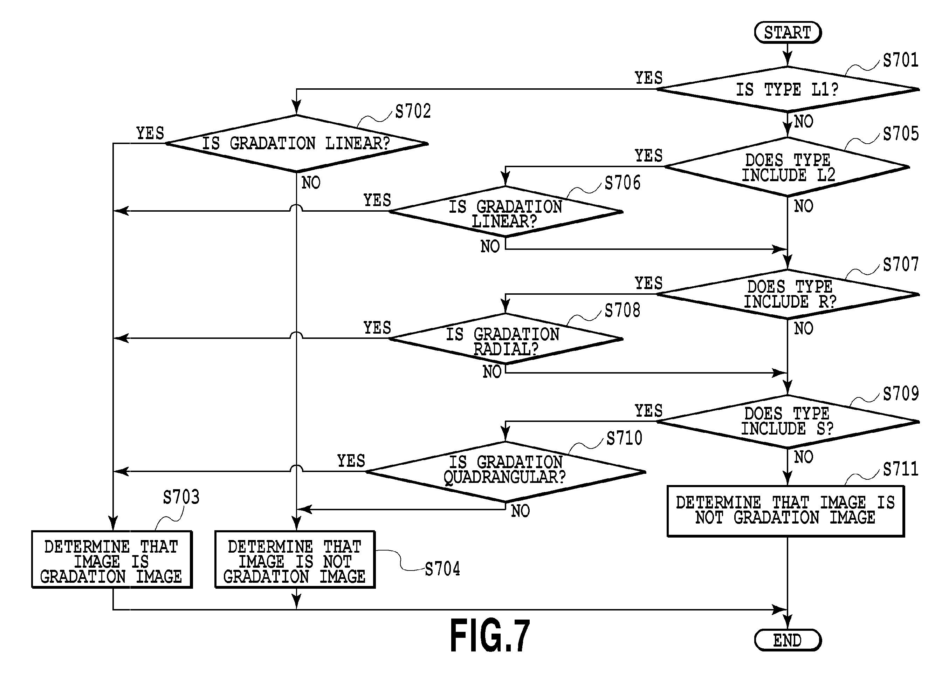

In the case of determining that there is not a possibility that the image drawing command acquired at step S401 represents a gradation image at step S402, the gradation image determination unit 321 terminates the gradation image determination processing and moves to the processing of the next drawing command. On the other hand, in the case of determining that there is a possibility that the drawing command acquired at step S401 represents a gradation image at step S402, the processing proceeds to step S403 and the gradation image determination unit 321 performs gradation image detail determination processing. The gradation image detail determination processing at step S403 will be explained in detail in FIG. 7, to be described later. At step S403, the gradation image determination unit 321 performs secondary determination processing to determine in more detail whether or not the image drawing command having a possibility of representing a gradation image represents a gradation image.

In the case of determining that the image drawing command does not represent a gradation image at step S404, the gradation image determination unit 321 terminates the gradation image determination processing and moves to the processing of the next drawing command. On the other hand, in the case where the gradation image determination unit 321 determines that the image drawing command represents a gradation image at step S404, the processing proceeds to step S405. At step S405, the gradation image determination unit 321 sets that the image drawing command acquired at step S401 represents a gradation image. The image drawing command set to represent a gradation image in this manner is modified by the gradation image drawing command modification unit 322 so that the drawing processing for graphics is performed in the subsequent processing.

As shown in FIG. 4, in the present embodiment, instead of determining whether an image drawing command represents a gradation image by simply referring to the image drawing command in detail, first, the primary determination processing is performed simply, and then, the detailed secondary determination processing is performed for the image drawing command indicated to have a possibility of representing a gradation image by the results. Consequently, it is made possible to increase the speed of the processing to determine whether or not an image drawing command represents a gradation image. Of course, it is also possible to perform the detailed primary determination processing from the beginning instead of performing the determination processing in two stages such as this, though the processing takes time.

FIG. 5 shows an example of a gradation type list of gradation images created by the MXDW 350. The image drawing command of gradation turned into an image by the MXDW 350 has features as shown in FIG. 5. In view of the features of image drawing commands to be sent to the printer driver, the gradation type may be roughly divided into seven types. As shown in FIG. 5, there may be a plurality of gradation types of gradation images created by the MXDW 350, and therefore, in the present embodiment, processing using a plurality of determination criteria is performed. In FIG. 5, "ID" is a number for identifying each gradation type. "Drawing results" in FIG. 5 represent examples of graphics objects output by the application. "Type" in FIG. 5 represents a combination of the kind of gradation (linear, radial, quadrangular) and the start position of gradation. For example, in the case where ID = 4, the start position of gradation is the bottom-right endpoint and in the case where ID = 5, the start position of gradation is the center. "Feature of image to be sent to printer driver" in FIG. 5 represents examples of features of gradation images turned into images.

Hereinafter, explanation of each gradation is given briefly and the feature of an image at the point in time of being sent to the printer driver is described.

The gradation types with ID = 1 to 3 represent examples of linear gradation types.

The gradation type with ID = 1 is linear (vertical), and the color in the horizontal direction is the same and the color changes linearly in the vertical direction. The image of this gradation type is an image with a width of one pixel at the point in time of being sent to the printer driver. Although not shown in FIG. 5, the image drawing command of the gradation type with ID = 1 will be a drawing command including information on the size to which the width is increased in the horizontal direction.

The gradation type with ID = 2 is linear (horizontal), and the color in the vertical direction is the same and the color changes linearly in the horizontal direction. The image of this gradation type is an image with a height of one pixel at the point in time of being sent to the printer driver. Although not shown in FIG. 5, the image drawing command of the gradation type with ID = 2 will be a drawing command including information on the size to which the height is increased in the vertical direction.

The gradation type with ID = 3 is linear (diagonal), and the color in the diagonal direction is the same and the color changes linearly in the normal direction of the line of the same color. In the case of the gradation linear in the vertical direction and the gradation linear in the horizontal direction, a part of the image, which is characteristic of the object, is sent to the printer driver, but in the case of the gradation linear in the diagonal direction, the entire image of the object is sent to the printer driver as it is. At this time, the image included in the image drawing command is not sent as one image, which is the entire image, but is sent as a plurality of images into which the image is divided so that each divided image has a certain height of a fixed number of pixels (e.g., 1,184 pixels). It is needless to say that an image having a size larger than that having a height of 1,184 pixels corresponds to the gradation type with ID = 3 even though the image is not a gradation image. That is, only with this condition, it is not possible to finally determine whether or not the image drawing command represents a gradation image. However, at the point in time of the primary determination, to be described later, in the case where an image divided so as to have a height of 1,184 pixels is included, the image drawing command is treated on the assumption that there is a possibility that the image drawing command represents the gradation linear in the diagonal direction. Details will be described later.

The gradation type with ID = 4 is radial (endpoint), and the color of the concentric circle shape is the same and the center is located on the side or the vertex of the graphics shape. The image of this gradation type is an image the vertical and horizontal enlargement/reduction ratios of which are equal at the point in time of being sent to the printer driver. That is, although not shown in FIG. 5, the image drawing command includes information indicating the enlargement/reduction ratio in the vertical direction and the enlargement/reduction ratio in the horizontal direction of the image shown in FIG. 5. Consequently, it is possible to determine whether or not the image drawing command represents an image the vertical and horizontal enlargement/reduction ratios of which are equal by referring to those enlargement/reduction ratios.

The gradation type with ID = 5 is radial (center), and the color of the concentric circle shape is the same and the center is located at the center of the graphics shape. The image of this gradation type is an image the vertical and horizontal enlargement/reduction ratios of which are equal at the point in time of being sent to the printer driver like the gradation type with ID = 4.

The gradation type with ID = 6 is quadrangular (endpoint), and the color of the concentric quadrangular shape is the same and the center is located on the side or the vertex of the graphics shape. The image of this gradation type is an image of a square at the point in time of being sent to the printer driver. Although not shown in FIG. 5, the image drawing command includes information indicating the enlargement/reduction ratio in the vertical direction and the enlargement/reduction ratio in the horizontal direction of the image shown in FIG. 5. Unlike the gradation types with ID = 4 and ID = 5, in the case of the quadrangular gradation type, the vertical and horizontal enlargement/reduction ratios included in the image drawing command are not necessarily equal.

The gradation type with ID = 7 is quadrangular (center), and the color of the concentric quadrangular shape is the same and the center is located at the center of the graphics shape. The image of this gradation type is an image of a square at the point in time of being sent to the printer driver like the gradation type with ID = 6.

As above, the feature of each gradation type and the feature of the gradation image at the point in time of being sent to the V4 driver are explained. In the present embodiment, whether or not the image drawing command represents a gradation image is determined based on the plurality of determination criteria as described above.

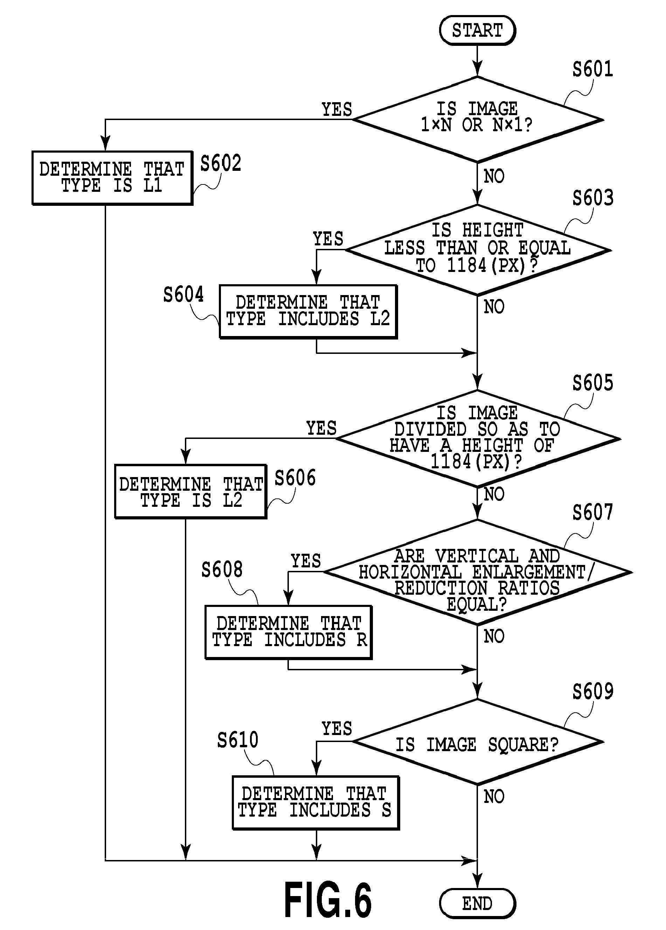

FIG. 6 shows a flowchart of the gradation image type determination processing, also showing details of the processing at step S401 in FIG. 4. The processing to be explained by this flowchart is processing to determine the gradation type in FIG. 5 described previously.

At step S601, the gradation image determination unit 321 determines whether the vertical or horizontal size of the acquired image is 1 pixel. In the case where the vertical or horizontal size is 1 pixel, there is a possibility that the image is a gradation image, and the processing proceeds to step S602 and it is determined that the gradation type is "L1" described in FIG. 5, and then, this flowchart is terminated.

In the case where the gradation image determination unit 321 determines that the vertical or horizontal size of the image is not 1 pixel at step S601, the processing proceeds to step S603. At step S603, the gradation image determination unit 321 determines whether the height of the acquired image is less than or equal to 1,184 pixels. As explained in FIG. 5, the image divided so as to have a height of 1,184 pixels has a possibility of being a gradation image, but an image having a height less than or equal to 1,184 pixels also has a possibility of being a gradation image. Consequently, in the case where the height is less than or equal to 1,184 pixels, the processing proceeds to step S604 and it is determined that the gradation type includes "L2" described in FIG. 5. The description of "includes" in the flowchart in FIG. 6 means that the gradation type has a possibility of being such a type because there is a possibility that the gradation type is determined to be another type in the subsequent processing. Consequently, even in the case where it is determined that the type includes "L2" at step S604, there is a possibility that the type is determined to be another type in the subsequent determination, and therefore, the processing proceeds to step S605.

In the case where the gradation image determination unit 321 determines that the height of the image is not less than or equal to 1,184 pixels at step S603, or after the processing at step S604, the processing proceeds to step S605. At step S605, the gradation image determination unit 321 determines whether the acquired image is an image divided so as to have a height of 1,184 pixels. In the case where the image is an image divided so as to have a height of 1,184 pixels, there is a possibility that the image is a gradation image, and therefore, the processing proceeds to step S606 and it is determined that the gradation type is "L2" described in FIG. 5, and then, this flowchart is terminated.

In the case of determining that the height of the image is not 1,184 pixels at step S605, the gradation image determination unit 321 determines whether the vertical and horizontal enlargement/reduction ratios of the acquired image are equal at step S607. In the case where the vertical and horizontal enlargement/reduction ratios are equal, there is a possibility that the image is a gradation image, and therefore, the processing proceeds to step S608 and it is determined that the gradation type includes "R" described in FIG. 5, and then, the processing proceeds to step S609.

At step S609, the gradation image determination unit 321 determines whether the acquired image is square. In the case where the acquired image is square, there is a possibility that the image is a gradation image, and therefore, the processing proceeds to step S610 and it is determined that the gradation type includes "S" described in FIG. 5, and then, this flowchart is terminated.

As above, by specifying the gradation type from the size and the enlargement/reduction ratio of an image as shown in FIG. 6, it is made possible to increase the speed of the processing to determine whether or not the image is a gradation image.

FIG. 7 shows a flowchart of the gradation image detail determination processing, also showing the detailed processing at step S403 in FIG. 4. The processing to be explained in FIG. 7 is performed for the image drawing command determined to have a possibility of representing a gradation image at step S401 in FIG. 4.

At step S701, the gradation image determination unit 321 determines whether the gradation type of the acquired image is "L1". In the case where the gradation type is "L1", the received image is 1 x N (px) or N x 1 (px). Consequently, at step S702, the gradation image determination unit 321 performs determination processing by analyzing the contents of the image as more detailed determination processing. Specifically, whether the color of the acquired image with N pixels in the vertical or horizontal direction changes linearly is determined. In the case where it is determined that the color of the image changes linearly at step S702, the processing proceeds to step S703 and the gradation image determination unit 321 determines that that acquired image is a gradation image. In the case where it is determined that the color of the image does not change linearly, the processing proceeds to step S704 and it is determined that the acquired image is not a gradation image, and then, this flowchart is terminated.

In the case of determining that the gradation type is not "L1" at step S701, the gradation image determination unit 321 determines whether the gradation type of the acquired image includes "L2" at step S705. In the case where the gradation type includes "L2", the processing proceeds to step S706 and determination processing to analyze the contents of the image is performed as more detailed determination processing. Specifically, the gradation image determination unit 321 determines whether the color of the image changes linearly in the diagonal direction. In the case where it is determined that the color of the image changes linearly at step S706, the processing proceeds to step S703 and the gradation image determination unit 321 determines that the acquired image is a gradation image. On the other hand, in the case where the gradation image determination unit 321 determines that the color of the image does not change linearly, the processing proceeds to step S707. Even in the case where the gradation type is not "L2", there is a possibility that the gradation type is another type, and therefore, it is not determined immediately that the acquired image is not a gradation image and the processing proceeds to the next processing.

In the case where the gradation image determination unit 321 determines that the gradation type does not include "L2" at step S705 and in the case where the gradation image determination unit 321 determines that the color of the image does not change linearly at step S706, the processing proceeds to step S707. At step S707, the gradation image determination unit 321 determines whether the gradation type includes "R". In the case where the gradation type includes "R", the processing proceeds to step S708 and the determination processing to analyze the contents of the image is performed. Specifically, the gradation image determination unit 321 determines whether the color of the image changes linearly in the form of a radial.

In the case where the gradation image determination unit 321 determines that the color of the image changes linearly in the form of a radial at step S708, the processing proceeds to step S703 and it is determined that the acquired image is a gradation image, and then, this flowchart is terminated. In the case where it is determined that the color of the image does not change linearly in the form of a radial, the processing proceeds to step S709.

In the case where the gradation image determination unit 321 determines that "R" is not included in the gradation type at step S707 and in the case where it is determined that the color of the image does not changes linearly in the form of a radial at step S708, the processing proceeds to step S709. At step S709, the gradation image determination unit 321 determines whether "S" is included in the gradation type. In the case where the gradation type includes "S", the processing proceeds to step S710 and the determination processing to analyze the contents of the image is performed. Specifically, the gradation image determination unit 321 determines whether the color of the image changes linearly in the form of a quadrangle.

In the case where the gradation image determination unit 321 determines that the color of the image changes linearly in the form of a quadrangle at step S710, the processing proceeds to step S703 and it is determined that the acquired image is a gradation image, and then, this flowchart is terminated. In the case where it is determined that the color of the image does not change linearly in the form of a quadrangle, the processing proceeds to step S704 and it is determined that the acquired image is not a gradation image, and then, this flowchart is terminated. Further, in the case where it is determined that "S" is not included in the gradation type at step S709, the processing proceeds to step S711 and it is determined that the acquired image is not a gradation image, and then, this flowchart is terminated.

As explained above, the gradation image determination processing of the gradation image determination unit 321 is completed. The image drawing command determined to represent a gradation image here is modified by the gradation image drawing command modification unit 322 so as to be processed as a drawing command of an object with a graphics attribute in the subsequent processing.

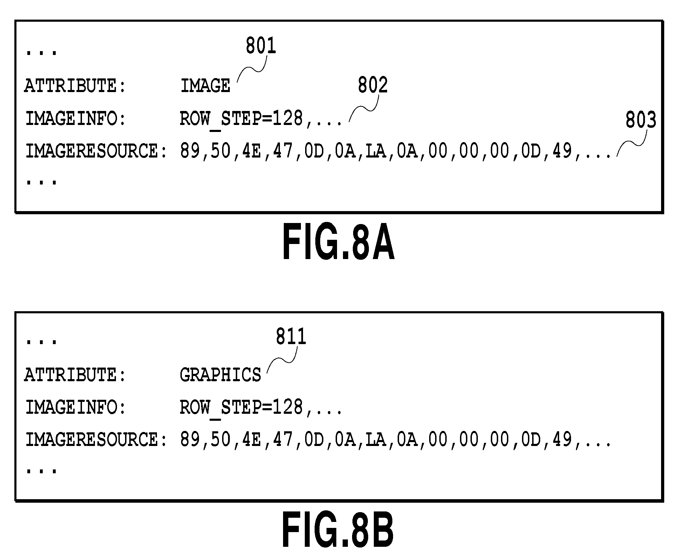

FIG. 8A and FIG. 8B each show an example of a drawing command modified by the gradation image drawing command modification unit 322. FIG. 8A and FIG. 8B show examples of intermediate data generated by the printer driver 310 interpreting the drawing command, not the drawing command in the form of XPS sent from the application 340 via the MXDW 350. Here, the gradation image drawing command modification unit 322 generates intermediate data by interpreting the drawing command in the form of XPS. An example is explained in which intermediate data to be generated is changed based on the results of the gradation image determination processing at this time.

FIG. 8A is a diagram simply representing intermediate data generated by the printer driver interpreting the image drawing command in the form of XPS sent to the printer driver. An item 801 represents an attribute. The image drawing command is sent to the printer driver as a drawing command of an image, and therefore, the attribute of the intermediate data to be generated is an "image attribute". An item 802 represents information about the image, such as a horizontal width. An item 803 represents the entity of the image, such as color information on each pixel. FIG. 8B shows an example of a gradation image drawing command after the modification by the gradation image drawing command modification unit 322. As shown by an item 811, the drawing command sent to the printer driver is an image drawing command, but the drawing command is determined to represent a gradation image, and therefore, the attribute of the intermediate data to be generated is changed into a "graphics attribute". In the subsequent processing, the image processing is performed by supposing that the object has a graphics attribute, and therefore, the printing results equivalent to those in the case where the same data is printed with the V3 driver based on the graphics drawing command in the form of GDI are obtained.

In the above-described example, the example in which the attribute of the intermediate data to be generated based on the image drawing command is changed is explained. That is, the example is explained in which the gradation image drawing command modification unit 322 generates the intermediate data from the image drawing command based on the determination results of the gradation image determination unit 321. As another method, it may also be possible for the gradation image drawing command modification unit 322 to perform processing to change the attribute of the intermediate data of the image object after the printer driver generates the intermediate data of the image object based on the image drawing command.

As above, in the present embodiment, a gradation image drawing command that should be treated as a drawing command of an object with a graphics attribute is determined from among the image drawing commands to be sent to the printer driver. Then, by modifying the gradation image drawing command so that the subsequent image processing becomes image processing equivalent to that for a graphics object, it is possible to eliminate a difference in drawing quality from that of the V3 driver with respect to a gradation object.

### [Second embodiment]

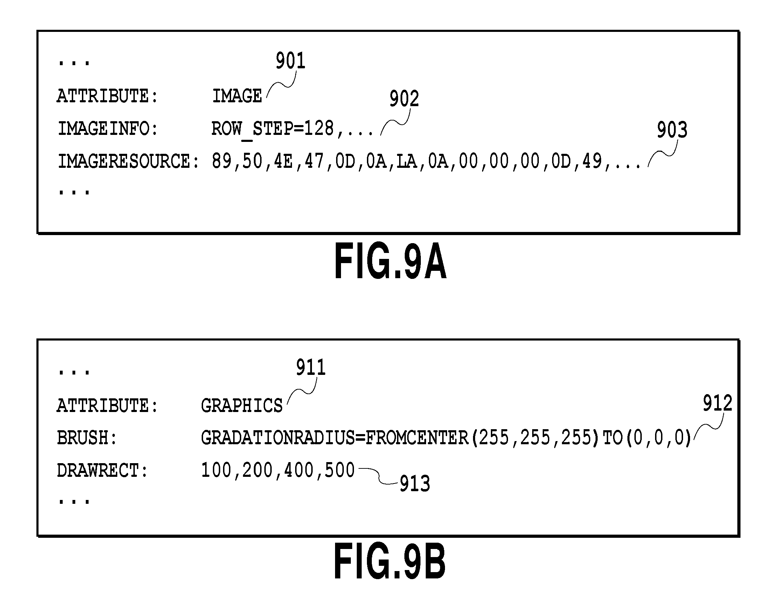

In the first embodiment, the example is explained in which the gradation image drawing command modification unit 322 only changes the attribute of a drawing command. That is, the example is explained in which the gradation image drawing command modification unit 322 generates intermediate data whose attribute item is changed in the case of generating the intermediate data by interpreting the image drawing command in the form of XPS. In the present embodiment, an image drawing command determined to represent a gradation image is converted into a graphics drawing command. That is, the intermediate data to be generated is changed into intermediate data to be generated based on a graphics drawing command. This processing also brings about the effect that it is possible to reduce the communication time by reducing the file size because the size of a graphics drawing command is generally smaller than the size of an image drawing command. An example of the modification is shown in FIG. 9A and FIG. 9B.

FIG. 9A is the same as FIG. 8A, and therefore, explanation is omitted. FIG. 9B shows an example of intermediate data after the gradation image drawing command modification. An item 911 shows a "graphics attribute" like the item 811 in FIG. 8B. Due to this, it is possible to turn the subsequent image processing into image processing equivalent to that for a graphics object. It may also be possible for the gradation image drawing command modification unit 322 in the present embodiment to further output intermediate data to be generated based on a gradation drawing command in place of intermediate data based on an image drawing command as illustrated in items 912 and 913.

In the examples in FIG. 8A and FIG. 8B, and in FIG. 9A and FIG. 9B, as the example of the modification processing of a drawing command, the example is explained in which the item of the attribute of intermediate data to be generated is changed, or an item other than the attribute is changed in the case where the intermediate data is generated, but the example is not limited to this. It may also be possible for the gradation image drawing command modification unit 322 to change the acquired image drawing command in the form of XPS itself into a gradation image drawing command. Even in the case where the image drawing command in the form of XPS itself is changed, intermediate data similar to that shown in FIG. 9B is output.

### [Third embodiment]

In the first and second embodiments, explanation is given by taking the printer driver as an example, but it may also be possible to perform the processing to modify a gradation image drawing command within the printer in place of the printer driver.

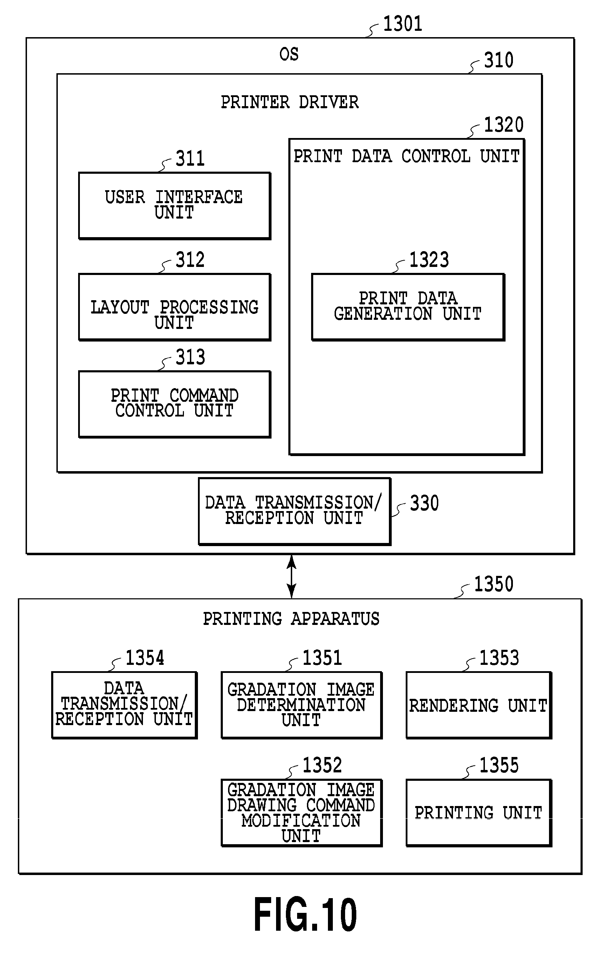

FIG. 10 is a block diagram showing details of a printing system in the present embodiment. Compared to FIG. 3, from a print data control unit 1320, the gradation image determination unit 321 and the gradation image drawing command modification unit 322 are removed. A printing apparatus 1350 has a gradation image determination unit 1351, a gradation image drawing command modification unit 1352, a rendering unit 1353, a data transmission/reception unit 1354, and a printing unit 1355.

A print data generation unit 1323 of the print data control unit 1320 generates PDL data compatible with the printing apparatus 1350 and transmits the PDL data to the printing apparatus 1350. At this time, the PDL data is sent to the printing apparatus 1350 in the state where the image drawing command of a gradation image turned into an image is included as it is. The gradation image determination unit 1351 and the gradation image drawing command modification unit 1352 perform the same processing as the processing explained in the first and second embodiments and as a result of this, the attribute of the corresponding object is changed into a graphics attribute. The rendering unit 1353 generates bitmap data and applies image processing in accordance with the attribute to the generated bitmap data. The printing unit 1355 performs printing processing based on the bitmap data.

As explained above, in the present specification, the change and modification of a drawing command may include the change and modification of the drawing command itself and the change and modification of intermediate data to be generated based on the drawing command. That is, the processing explained in the present specification only needs to be processing in which at least the attribute of an object of a gradation image is changed from the image attribute into the graphics attribute in the stage before image processing is performed based on the attribute of the object (i.e., in the stage of the drawing command and intermediate data).

### [Other Embodiments]

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment (s) and/or that includes one or more circuits (e.g., application specific integrated circuit (ASIC)) for performing the functions of one or more of the above-described embodiment (s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

According to the present invention, in the case where an object of gradation is drawn, it is possible to eliminate a difference in printing results between the V3 driver and the V4 driver.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

In the case where an object of gradation is drawn, printing results are different between the V3 driver and the V4 driver. A drawing command processing apparatus determines (S401, S403) whether an image drawing command represents a gradation image based on a plurality of determination criteria. Then, in the case where the image drawing command is determined to represent a gradation image, the drawing command processing apparatus processes (S405) the image drawing command as a drawing command of an object with a graphics attribute.

## Claims

1. A drawing command processing apparatus comprising:
a determination unit (321,1351) configured to determine whether an image drawing command represents a gradation image based on a plurality of determination criteria; and
a control unit (322,1352) configured to process the image drawing command as a drawing command of an object with a graphics attribute in a case where the determination unit determines that the image drawing command represents a gradation image.

2. The drawing command processing apparatus according to claim 1, wherein
the determination unit determines whether the image drawing command represents a gradation image based on a size or an enlargement/reduction ratio of an image included in the image drawing command.

3. The drawing command processing apparatus according to claim 1, wherein
the determination unit determines whether there is a possibility that the image drawing command represents a gradation image based on a size or an enlargement/reduction ratio of an image included in the image drawing command, and
in a case of determining that there is a possibility that the image drawing command represents the gradation image, the determination unit determines whether the image drawing command represents a gradation image by analyzing the image.

4. The drawing command processing apparatus according to claim 1, wherein
the determination unit determines whether there is a possibility that the image drawing command represents a gradation image based on a size or an enlargement/reduction ratio of an image included in the image drawing command,
in a case of determining that there is a possibility that the image drawing command represents the gradation image, the determination unit determines a type of a gradation image that can correspond to the gradation image, and
the determination unit determines whether the image drawing command represents a gradation image by analyzing the image in accordance with the type of the gradation image.

5. The drawing command processing apparatus according to claim 4, wherein
the determination unit determines an image drawing command including an image with a height or width of one pixel to represent a type of gradation linear in the horizontal direction or gradation linear in the vertical direction.

6. The drawing command processing apparatus according to claim 4, wherein
the determination unit determines an image drawing command including an image divided so as to have a height of a fixed number of pixels to represent a type of gradation linear in the diagonal direction.

7. The drawing command processing apparatus according to claim 4, wherein
the determination unit determines an image drawing command including an image divided so as to have a height of 1,184 pixels to represent a type of gradation linear in the diagonal direction.

8. The drawing command processing apparatus according to claim 4, wherein
the determination unit determines an image drawing command including an image the vertical and horizontal enlargement/reduction ratios of which are equal to represent a type of gradation in the form of a radial.

9. The drawing command processing apparatus according to claim 4, wherein
the determination unit determines an image drawing command including an image the number of vertical pixels and the number of horizontal pixels of which are equal to represent a type of gradation in the form of a quadrangle.

10. The drawing command processing apparatus according to claim 1, wherein
the control unit changes the image drawing command into a graphics drawing command of gradation.

11. The drawing command processing apparatus according to claim 1, wherein
the control unit includes a generation unit configured to generate intermediate data of an object represented by the image drawing command by interpreting the image drawing command, and
the generation unit generates intermediate data that changes the attribute of an object into a graphics attribute from the image drawing command determined to represent a gradation image.

12. The drawing command processing apparatus according to claim 1, wherein
the control unit includes a generation unit configured to generate intermediate data of an object represented by the image drawing command by interpreting the image drawing command, and
the generation unit generates intermediate data of a graphics object from the image drawing command determined to represent a gradation image.

13. A drawing command processing method, the method comprising the steps of:
determining (S401, S403) whether an image drawing command represents a gradation image based on a plurality of determination criteria; and
processing (S405) the image drawing command as a drawing command of an object with a graphics attribute in a case where it is determined that the image drawing command represents a gradation image in the determining.

14. A program for causing a computer to perform a drawing command processing method, the method comprising the steps of:
determining (S401,S403) whether an image drawing command represents a gradation image based on a plurality of determination criteria; and
processing (S405) the image drawing command as a drawing command of an object with a graphics attribute in a case where it is determined that the image drawing command represents a gradation image in the determining.
